# EUROPÄISCHE PATENTSCHRIFT

(11) **EP 1 976 756 B1**
(45) Veröffentlichungstag und Bekanntmachung des Hinweises auf die Patenterteilung: **01.08.2012**
(21) Anmeldenummer: 06829007.1
(22) Anmeldetag: 11.11.2006
(51) Int. Cl.: B64D 11/06

(54) **SITZPNEUMATIKVORRICHTUNG**
PNEUMATIC SEAT DEVICE
DISPOSITIF PNEUMATIQUE DE SIÈGE

(30) Priorität: 28.01.2006 DE 102006004071
(43) Veröffentlichungstag der Anmeldung: 08.10.2008
(73) Patentinhaber: Recaro Aircraft Seating GmbH & Co. KG, 74523 Schwäbisch Hall (DE)
(72) Erfinder: KRÄMER, Marco, 74549 Wolpertshausen (DE)
(74) Vertreter: Daub, Thomas
(86) Internationale Anmeldenummer: PCT/EP2006/010829
(87) Internationale Veröffentlichungsnummer: WO 2007/085282

(56) Entgegenhaltungen:
- DE-A1- 19 832 531
- DE-A1-102004 047 149
- DE-A1-102004 047 165
- DE-C1- 10 162 853
- GB-A- 2 168 893
- US-A1- 2002 070 591

## Beschreibung

### Stand der Technik

Die Erfindung geht aus von einer Sitzpneumatikvorrichtung nach dem Oberbegriff des Anspruchs 1. Eine solche Vorrichtung ist aus der GB 2 168 893 bekannt.

Die bekannten Sitzpneumatikvorrichtungen dieser Art weisen eine Pneumatikeinheit und eine Recheneinheit auf. Diese Sitzpneumatikvorrichtungen umfassen meist eine mit der Recheneinheit gekoppelte zentrale Sensoreinheit, die zur Druckerfassung der gesamten Sitzpneumatikvorrichtung vorgesehen ist, was lange Zuleitungen erfordert und eine lange Reaktionszeit der Sitzpneumatikvorrichtung zur Folge hat.

Der Erfindung liegt insbesondere die Aufgabe zugrunde, eine Sitzpneumatikvorrichtung mit einer schnellen und effektiven Datenverarbeitung bereitzustellen. Sie wird gemäß der Erfindung durch die Merkmale des Anspruchs 1 gelöst. Weitere Ausgestaltungen ergeben sich aus den Neben- und Unteransprüchen.

### Vorteile der Erfindung

Die Erfindung geht aus von einer Sitzpneumatikvorrichtung, insbesondere einer Flugzeugsitzpneumatikvorrichtung, mit einer vielzohl von Pneumatikeinheit und wenigstens einer zentralen Recheneinheit.

Es wird vorgeschlagen, dass die einzelnen Pneumatikeinheiten der Sitzpneumatikvorrichtung jeweils zumindest eine dezentrale Recheneinheit aufweisen, wodurch eine vorteilhafte Aufteilung von Aufgaben und/oder Funktionen innerhalb der Sitzpneumatikvorrichtung auf die einzelnen Recheneinheiten erreicht werden kann. Vor allem kann damit eine effektive und schnelle Datenverarbeitung unter Ausnutzung der beiden Recheneinheiten erzielt werden und somit eine schnelle Steuerung und/oder Regelung der Sitzpneumatikvorrichtung. Dabei soll unter einer "Recheneinheit" eine Auswerteeinheit, eine Kontrolleinheit, eine Steuereinheit und/oder eine Regeleinheit verstanden werden, wobei eine Recheneinheit sowohl von einem Prozessor allein als auch insbesondere von einem Prozessor und weiteren Elektronikbauteilen, wie Speichermitteln, gebildet sein kann.

Ferner wird vorgeschlagen, dass die Recheneinheit en vorzugsweise verteilt angeordnet sind. Dabei soll unter "verteilt angeordnet" verstanden werden, dass Recheneinheiten insbesondere zueinander beabstandet und/oder in differierenden Gehäuseeinheiten angeordnet sind.

Erfindungsgemäß wird vorgeschlagen, dass die Sitzpneumatikvorrichtung ein Datennetzwerk umfasst, wodurch ein flexibler und schneller Datentransfer innerhalb der Sitzpneumatikvorrichtung erreicht werden kann. Besonders vorteilhaft kann der Datentransfer durch einen Datenbus gestaltet werden, da dieser einen gleichzeitigen Datentransfer in unterschiedliche Richtungen ermöglicht. Unter einem "Datennetzwerk" soll eine Vorrichtung verstanden werden, die zur Vernetzung von mindestens zwei Einheiten untereinander vorgesehen ist.

Besonders vorteilhaft ist, wenn die Datenübertragung zumindest eine Dateneinheit aufweist, die zum drahtlosen Empfang und/oder zum drahtlosen Übersenden von Daten vorgesehen ist, womit eine flexible Datenübertragung, vor allem über größere Distanzen, erzielt und eine einfache Montage der Sitzpneumatikvorrichtung erreicht werden kann. Unter einer "drahtlosen" Übertragung von Daten soll vor allem eine Übertragung durch Funksignale bzw. eine Übertragung von Signalen mit elektromagnetischen Wellen, insbesondere durch Infrarotsigriale, verstanden werden.

Ferner wird vorgeschlagen, dass die Recheneinheiten zum Datenaustausch über das Datennetzwerk vorgesehen sind. Diese Anordnung ermöglicht einen schnellen und direkten Datenaustausch zwischen den einzelnen Recheneinheiten, so dass die Aufgaben und/oder Funktionen der einzelnen Recheneinheiten besonders vorteilhaft aufeinander abgestimmt werden können.

Erfindungsgemäβ weist die Sitzpneumatikvorrichtung zumindest eine zentrale Recheneinheit auf, wodurch eine zweckmäßige Teilung der Aufgaben zwischen den einzelnen Recheneinheiten erreicht werden kann. Unter einer "zentralen" Recheneinheit soll eine Recheneinheit verstanden werden, die im Wesentlichen für übergeordnete, das gesamte System betreffende Aufgaben vorgesehen ist. Insbesondere sind in diesem Zusammenhang einer zentralen Recheneinheit Aufgaben zugeteilt, wie beispielsweise die Koordination einzelner, dezentraler Recheneinheiten zueinander. Besonders vorteilhaft ist es, wenn die zentrale Recheneinheit eine zentrale Speichereinheit aufweist, wodurch weitere Bauteile, Bauraum, Gewicht, Montageaufwand und Kosten, insbesondere in den weiteren Recheneinheiten, eingespart werden können.

Zudem ist es von Vorteil, wenn die Sitzpneumatikeinheit mit zumindest zwei Speichereinheiten versehen ist, wodurch ein schneller und flexibler Zugriff von den Recheneinheiten auf die Speichereinheiten ermöglicht wird, insbesondere wenn die Speichereinheiten verteilt, jeweils einer Recheneinheit zugeordnet, angeordnet sind.

In einer weiteren Ausgestaltung der Erfindung wird eine Sitzpneumatikvorrichtung, insbesondere eine Flugzeugsitzpneumatikvorrichtung, mit wenigstens einer Pneumatikeinheit und wenigstens einer ersten Funktionseinheit vorgeschlagen, wobei die Sitzpneumatikvorrichtung zumindest eine weitere Funktionseinheit aufweist, die zumindest eine Funktion gemeinsam mit der ersten Funktionseinheit überschneidend belegt. Dadurch kann eine vorteilhafte Sicherheit einer Sitzpneumatikvorrichtung erreicht werden, indem bestimmte Funktionen einer doppelten Kontrolle und/oder Regelung ausgesetzt sind und/oder indem bei Ausfall einer Funktionseinheit deren Funktion von der anderen Funktionseinheit übernommen werden kann. Beispielsweise können die beiden Funktionseinheiten von Pumpen innerhalb der Sitzpneumatikvorrichtung gebildet werden, wodurch der Ausfall einer Pumpe durch eine zweite Pumpe kompensiert und somit eine erhöhte Funktionssicherheit gewährleistet werden kann.

Besonders vorteilhaft ist es, wenn die erste Funktionseinheit und die weitere Funktionseinheit von Recheneinheiten gebildet sind, wodurch eine gegenseitige Kontrolle der einzelnen Recheneinheiten erreicht werden kann. Zudem können auch die Aufgaben und/oder Funktionen einer Recheneinheit von einer zweiten Recheneinheit übernommen und ausgeführt werden. Dadurch ist die Funktionalität der Sitzpneumatikvorrichtung selbst bei Störungen oder Ausfall einer Recheneinheit gewährleistet.

Vorteilhafterweise wird eine erste und zumindest eine zweite Funktionseinheit von Sensoreinheiten gebildet, wodurch eine besonders effiziente und redundante Sensierung von Überwachungsgrößen innerhalb der Sitzpneumatikvorrichtung erreicht werden kann. So kann beispielsweise bei einer vorliegenden Störung einer Sensoreinheit diese erkannt und die Aufgaben dieser Sensoreinheit können durch eine zweite Sensoreinheit übernommen werden. Die Sensoreinheiten können ferner vorteilhaft verteilt, d.h. insbesondere zueinander beabstandet und/oder in unterschiedlichen Gehäuseeinheiten angeordnet sein, so dass besonders kurze Reaktionszeiten realisierbar sind.

Ferner wird vorgeschlagen, dass die Sitzpneumatikvorrichtung zumindest eine Sensoreinheit zur Drucksensierung aufweist. Mittels dieser Sensoreinheit kann zusammen mit den Recheneinheiten eine zentrale und/oder dezentrale Druckkontrolle der Sitzpneumatikvorrichtung erreicht werden. Ferner kann vorteilhaft ein schneller und gezielter Druckausgleich zwischen einzelnen Luftkammern erreicht werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Beschreibung des Ausführungsbeispiels

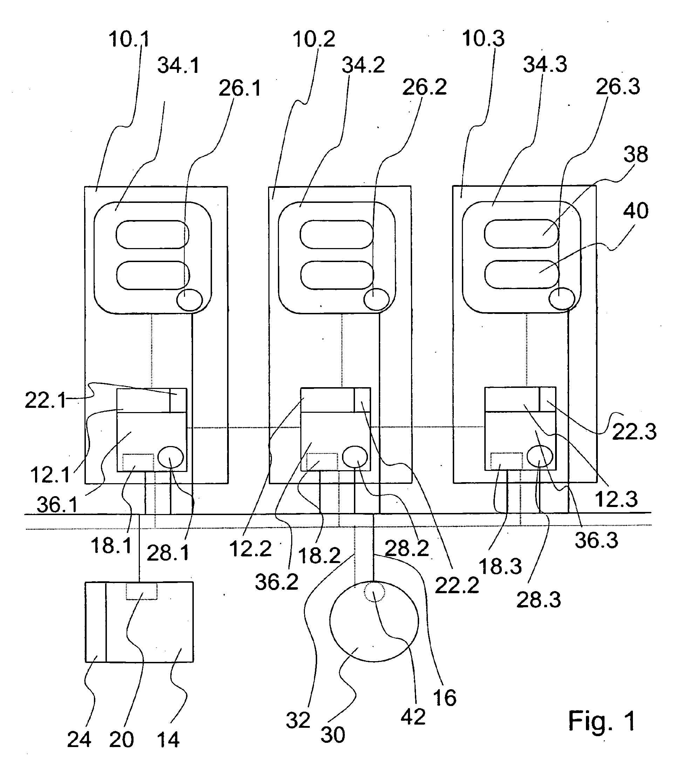

Figur 1 zeigt eine schematische Sitzpneumatikvorrichtung bzw. eine Flugzeugsitzpneumatikvorrichtung eines Flugzeugsitzes, die eine zentrale Recheneinheit 14, eine Pumpe 30 und drei Pneumatikeinheiten 10.1, 10.2, 10.3 umfasst. Die zentrale Recheneinheit 14 weist eine zentrale Speichereinheit 24 und einen hier nicht näher dargestellten Prozessor auf. Der Datenaustausch zwischen der zentralen Recheneinheit 14, der Pumpe 30 und den drei Pneumatikeinheiten 10.1, 10.2, 10.3 erfolgt über ein Datennetzwerk, das mit einem Datenbus 16 ausgestattet ist. Zudem sind die zentrale Recheneinheit 14, die Pumpe 30 und die Pneumatikeinheiten 10.1, 10.2, 10.3 mit jeweils einer Dateneinheit 18.1, 18.2, 18.3, 20, 42 ausgestattet, die zum drahtlosen Empfang und/oder zur drahtlosen Übertragung von Signalen bzw. Daten zwischen den einzelnen Pneumatikeinheiten 10.1, 10.2, 10.3 der zentralen Recheneinheit 14 und der Pumpe 30 vorgesehen sind. So kann bei Ausfall oder Störung des Datennetzwerks über den Datenbus 16 der Datenaustausch über Funksignale gestaltet werden, so dass im Betrieb der Sitzpneumatikvorrichtung jederzeit eine effiziente und sichere Datenübertragung zwischen den einzelnen Einheiten der Sitzpneumatikvorrichtung gewährleistet wird. Anstatt eines Datenbusses 16 bzw. einer Dateneinheit 18.1, 18.2, 18.3, 20, 42 zum Datenaustausch mittels Funksignale sind je nach Anordnung der Sitzpneumatikvorrichtung weitere, dem Fachmann als sinnvoll erscheinende Ausgestaltungen des Datennetzwerks möglich. Zudem weist die Sitzpneumatikvorrichtung eine von einer Druckluftleitung ausgebildete Übertragungseinheit 32 auf, die eine Übertragung von Luft zwischen der Pumpe 30 und den Pneumatikeinheiten 10.1, 10.2, 10.3 und auch zwischen den einzelnen Pneumatikeinheiten 10.1, 10.2, 10.3 untereinander ermöglicht.

Die einzelnen Pneumatikeinheiten 10.1, 10.2, 10.3 sind getrennt voneinander angeordnet und weisen jeweils eine eigene dezentrale Recheneinheit 12.1, 12.2, 12.3 und ein Pneumatikkissen 34.1, 34.2, 34.3 mit integrierter Sensoreinheit 26.1, 26.2, 26.3 auf. Die dezentrale Recheneinheit 12.1, 12.2, 12.3 ist zur Steuerung und/oder Regelung der die jeweilige Recheneinheit 12.1, 12.2, 12.3 aufweisenden Pneumatikeinheit 10.1, 10.2, 10.3 vorgesehen. Die Anzahl der Pneumatikkissen 34.1, 34.2, 34.3 innerhalb einer Pneumatikeinheit 10.1, 10.2, 10.3 kann dabei variabel, den Sitzanforderungen innerhalb der Sitzpneumatikvorrichtung angepasst sein.

Die dezentralen Recheneinheiten 12.1, 12.2, 12.3 umfassen jeweils eine dezentrale Speichereinheit 22.1, 22.2, 22.3 und einen dezentralen Prozessor, der hier nicht näher dargestellt ist. Der Datenbus 16 ermöglicht neben dem Austausch von Daten der dezentralen Recheneinheiten 12.1, 12.2, 12.3 mit der zentralen Recheneinheit 14 auch den Austausch von Daten der dezentralen Recheneinheiten 12.1, 12.2, 12.3 untereinander, so dass stets ein schneller und flexibler Datenaustausch im Betrieb der Sitzpneumatikvorrichtung stattfindet. An die de-, zentralen Recheneinheiten 12.1, 12.2, 12.3 sind jeweils eine Ventileinheit 36.1, 36.2, 36.3 und eine weitere Sensoreinheit 28.1, 28.2, 28.3 angeschlossen, die für eine schnelle und von der zentralen Recheneinheit 14 unabhängige Regelung der Druckverhältnisse in den Pneumatikkissen 34.1, 34.2, 34.3 vorgesehen sind.

Die Pneumatikkissen 34.1, 34.2, 34.3 umfassen jeweils zwei Luftkammern 38, 40, die getrennt voneinander mit Luft aufgeblasen oder evakuiert werden können. Die Anzahl der Luftkammern 38, 40 innerhalb einer Pneumatikeinheit 10.1, 10.2, 10.3 kann dabei variabel gestaltet und den Sitzanforderungen angepasst sein. Innerhalb der Pneumatikeinheiten 10.1, 10.2, 10.3 wird durch die Sensoreinheiten 26.1, 26.2, 26.3, 28.1, 28.2, 28.3 in Kombination mit den dezentralen Recheneinheiten 12.1, 12.2, 12.3 und den Ventileinheiten 36.1, 36.2, 36.3 eine schnelle dezentrale Druckregelung in den Pneumatikkissen 34.1, 34.2, 34.3 bzw. in den Luftkammern 38, 40 erreicht, indem Luft zwischen den einzelnen Luftkammern 38, 40 über die Übertragungseinheit 32 ausgetauscht werden kann. Zudem ist die Sitzpneumatikvorrichtung so ausgelegt, dass auch zwischen den Pneumatikeinheiten 10.1, 10.2, 10.3 eine Druckregulierung möglich ist, indem Luft zwischen den Pneumatikkissen 34.1, 34.2, 34.3 der Pneumatikeinheiten 10.1, 10.2, 10.3 über die Übertragungseinheit 32 ausgetauscht werden kann. Mittels der Sensoreinheiten 26.1, 26.2, 26.3, 28.1, 28.2, 28.3 findet dabei zusammen mit den dezentralen Recheneinheiten 12.1, 12.2, 12.3 eine schnelle lokale Drucküberwachung in den einzelnen Pneumatikkissen 34.1, 34.2, 34.3 statt. Die Druckregulierung zwischen den einzelnen Pneumatikeinheiten 10.1, 10.2, 10.3 wird dabei von den dezentralen Recheneinheiten 12.1, 12.2, 12.3 geregelt, die durch den Datenbus 16 stets Informationen über die Druckverhältnisse aller Pneumatikkissen 34.1, 34.2, 34.3 der Sitzpneumatikvorrichtung erhalten. Zudem kann auch über die zentrale Recheneinheit 14 der Druck und die Luftzufuhr und/oder Luftevakuierung in den Pneumatikkissen 34.1, 34.2, 34.3 geregelt werden und damit verbunden eine Kontrolle der dezentralen Recheneinheiten 12.1, 12.2, 12.3 durch die zentrale Recheneinheit 14 erzielt werden, da diese ebenfalls mittels des Datenbusses 16 im ständigen Datenaustausch mit sämtlichen Einheiten der Sitzpneumatikvorrichtung ist.

Die einzelnen Ventileinheiten 36.1, 36.2, 36.3 sind zusätzlich durch die von einer Druckluftleitung ausgebildete Übertragungseinheit 32 jeweils mit den drei Pneumatikkissen 34.1, 34.2, 34.3 gekoppelt und weisen entsprechend der Anzahl der in der Sitzpneumatikvorrichtung vorhandenen Luftkammern 38, 40 sechs Ventilelemente auf, die hier nicht näher dargestellt sind. Mittels der Ventileinheit 36.1, 36.2, 36.3, die von der dezentralen Recheneinheit 12.1, 12.2, 12.3 gesteuert und/oder geregelt wird, kann somit die Luftzufuhr und/oder Luftevakuierung aller Pneumatikkissen 34.1, 34.2, 34.3 einer Sitzpneumatikvorrichtung erreicht werden und eine damit verbundene Funktionssicherheit der Sitzpneumatikvorrichtung gewährleistet werden. Zudem kann mittels des Datenaustauschs über den Datenbus 16 zwischen den einzelnen dezentralen Recheneinheiten 12.1, 12.2, 12.3 beispielsweise der Ausfall der Ventileinheit 36.1 erfasst werden und deren Funktion von einer der beiden weiteren Ventileinheiten 36.2, 36.3 übernommen werden, indem diese die dazu erforderlichen Regel- und/oder Steuersignale von der Recheneinheiten 12.1 erhält. Dies gewährleistet bei Ausfall einer der Ventileinheiten 36.1, 36.2, 36.3 weiterhin eine geregelte Luftzufuhr bzw. Luftevakuierung des jeweiligen Pneumatikkissens 34.1, 34.2, 34.3.

Durch die Doppelbelegung einer Pneumatikeinheit 10.1, 10.2, 10.3 mit den Sensoreinheiten 26.1, 28.1, 26.2, 28.2, 26.3, 28.3 ist eine gegenseitige, redundante Kontrolle der Druckverhältnisse in den Pneumatikkissen 34.1, 34.2, 34.3 vorgesehen. Zudem kann beispielsweise bei Ausfall der Sensoreinheit 26.1 die Druckkontrolle mittels der Sensoreinheit 28.1 der Pneumatikeinheit 10.1 weiterhin gewährleistet werden, indem die Recheneinheit 12.1 anhand der von den Sensoreinheiten 26.1, 28.1 erhaltenen Signale dies erkennt und zur Druckkontrolle nur noch auf die Signale der Sensoreinheit 28.1 zurückgreift. Des Weiteren ist jede dezentrale Recheneinheit 12.1, 12.2, 12.3 dazu vorgesehen, alle Sensoreinheiten 26.1, 28.1, 26.2, 28.2, 26.3, 28.3 und Ventileinheiten 36.1, 36.2, 36.3 der Sitzpneumatikvorrichtung über den Datenbus 16 anzusteuern. Mittels der Sensoreinheiten 26.1, 26.2, 26.3, 28.1, 28.2, 28.3 ist zwischen den einzelnen Pneumatikeinheiten 10.1, 10.2, 10.3 eine redundante Drucküberwachung vorgesehen, indem mit den Sensoreinheiten 26.1, 26.2, 26.3, 28.1, 28.2, 28.3 einer Pneumatikeinheit 10.1, 10.2, 10.3 der Druck in den Pneumatikkissen 34.1, 34.2, 34.3 der gesamten Sitzpneumatikvorrichtung überwacht werden kann, so dass selbst bei Ausfall beider zu einer Pneumatikeinheit 10.1, 10.2, 10.3 gehörender Sensoreinheiten 26.1, 28.1, 26.2, 28.2, 26.3, 28.3 die Funktionalität der Pneumatikeinheit 10.1, 10.2, 10.3 aufrechterhalten werden kann.

Zusätzlich ist es möglich, dass die Aufgaben der einzelnen dezentralen Recheneinheiten 12.1, 12.2, 12.3 von einer anderen dezentralen Recheneinheit 12.1, 12.2, 12.3 übernommen werden. So können beispielsweise die dezentralen Recheneinheiten 12.2, 12.3 die Aufgaben und Funktionen der dezentralen Recheneinheit 12.1 übernehmen, so dass innerhalb der Sitzpneumatikvorrichtung eine erhöhte und effiziente Funktionssicherheit erreicht werden kann.

Die Sitzpneumatikvorrichtung ist ein Teil einer Sitzvorrichtung mit mehreren, im Wesentlichen entsprechenden Sitzpneumatikvorrichtungen. Die Sitzvorrichtung umfasst mehrere, von Einzelsitzen ausgebildete Sitzeinheiten und weist die zentrale Recheneinheit 14 und die zentrale Pumpe 30 auf. Jede Sitzeinheit, die in Figur 1 nicht näher dargestellt ist, umfasst eine der Pneumatikeinheiten 10.1, 10.2, 10.3, wobei die Pneumatikkissen 34.1, 34.2, 34.3 im Bereich einer Rückenlehne und/oder eines Sitzbodens angeordnet sind. Die Bedienung der Sitzeinheit erfolgt über ein nicht näher dargestelltes Eingabemedium, beispielsweise ein Bedienelement, welches mit der zentralen Recheneinheit 14 und der an die jeweilige Sitzeinheit gekoppelten dezentralen Recheneinheit 12.1, 12.2, 12.3 über das Datennetzwerk verbunden ist. Somit kann bei Ausfall einer dezentralen Recheneinheit 12.1, 12.2, 12.3 die Regelung der Sitzeinheiten einer Sitzvorrichtung weiterhin gewährleistet werden, indem die zentrale Recheneinheit 14 die Aufgaben und Funktionen der dezentralen Recheneinheit 12.1, 12.2, 12.3 übernimmt. Ferner sind die dezentralen Recheneinheiten 12.1, 12.2, 12.3 dazu vorgesehen, die Aufgaben der zentralen Recheneinheit 14 wahrzunehmen, sollte diese ausfallen.

### Bezugszeichen

- 10.1: Pneumatikeinheit
- 10.2: Pneumatikeinheit
- 10.3: Pneumatikeinheit
- 12.1: Recheneinheit
- 12.2: Recheneinheit
- 12.3: Recheneinheit
- 14: Recheneinheit
- 16: Datenbus
- 18.1: Dateneinheit
- 18.2: Dateneinheit
- 18.3: Dateneinheit
- 20: Dateneinheit
- 22.1: Speichereinheit
- 22.2: Speichereinheit
- 22.3: Speichereinheit
- 24: Speichereinheit
- 26.1: Sensoreinheit
- 26.2: Sensoreinheit
- 26.3: Sensoreinheit
- 28.1: Sensoreinheit
- 28.2: Sensoreinheit
- 28.3: Sensoreinheit
- 30: Pumpe
- 32: Übertragungseinheit
- 34.1: Pneumatikkissen
- 34.2: Pneumatikkissen
- 34.3: Pneumatikkissen
- 36.1: Ventileinheit
- 36.2: Ventileinheit
- 36.3: Ventileinheit
- 38: Luftkammer
- 40: Luftkammer
- 42: Dateneinheit

## Patentansprüche

1. Sitzpneumatikvorrichtung, insbesondere Flugzeugsitzpneumatikvorrichtung, mit einer Vielzahl von Pneumatikeinheiten (10.1, 10.2, 10.3), die jeweils zumindest ein Pneumatikkissen aufweisen, und wenigstens einer zentralen Recheneinheit (14) gekenzeichnet durch ein Datennetzwerk, und dadurch, dass die einzelnen Pneumatikeinheiten (10.1, 10.2, 10.3) jeweils eine eigene dezentrale Recheneinheit (12.1, 12.2, 12.3) aufweisen, an die jeweils eine Ventileinheit (36.1, 36.2, 36.3) und eine Sensoreinheit (28.1, 28.2, 28.3) angeschlossen sind, und die zentralen und dezentralen Recheneinheiten (12.1, 12.2, 12.3, 14) zum Datenaustausch über das Datennetzwerk vorgesehen sind.

2. Sitzpneumatikvorrichtung nach Anspruch 1,
**dadurch gekennzeichnet,**
**dass** die Recheneinheiten (12.1, 12.2, 12.3, 14) verteilt angeordnet sind.

3. Sitzpneumatikvorrichtung nach einem der vorhergehenden Ansprüche,
**gekennzeichnet durch**
zumindest eine Dateneinheit (18.1, 18.2, 18.3, 20, 42), die zum drahtlosen Empfang und/oder zum drahtlosen Übersenden von Daten vorgesehen ist.

4. Sitzpneumatikvorrichtung nach einem der vorhergehenden Ansprüche,
**dadurch gekennzeichnet,**
**dass** das Datennetzwerk mit einem Datenbus (16) ausgestattet ist, der den Austausch von Daten der dezentralen Recheneinheiten (12.1, 12.2, 12.3) mit der zentralen Recheneinheit (14) und den Austausch von Daten der dezentralen Recheneinheiten (12.1, 12.2, 12.3) untereinander ermöglicht.

5. Sitzpneumatikvorrichtung nach einem der vorhergehenden Ansprüche,
**gekennzeichnet durch**
zumindest zwei Speichereinheiten (22.1, 22.2, 22.3, 24).

6. Sitzpneumatikvorrichtung nach einem der vorhergehenden Ansprüche,
**dadurch gekennzeichnet,**
**dass** die dezentralen Recheneinheiten (12.1, 12.2, 12.3) jeweils eine dezentrale Speichereinheit (22.1, 22.2, 22.3) umfassen.

7. Sitzpneumatikvorrichtung nach einem der vorhergehenden Ansprüche,
**gekennzeichnet durch**
zumindest eine Sensoreinheit (26.1, 26.2, 26.3, 28.1, 28.2, 28.3) zur Drucksensierung.

8. Sitzpneumatikvorrichtung nach einem der vorhergehenden Ansprüche,
**gekennzeichnet durch**
eine Pumpe (30) und eine von einer Druckluftleitung ausgebildete Übertragungseinheit (32), die eine Übertragung von Luft zwischen der Pumpe (30) und den Pneumatikeinheiten (10.1, 10.2, 10.3) und zwischen den einzelnen Pneumatikeinheiten (10.1, 10.2, 10.3) untereinander ermöglicht.

## Claims

1. Pneumatic seat device, in particular pneumatic aircraft seat device, with a multiplicity of pneumatic units (10.1, 10.2, 10.3) each of which has at least one pneumatic cushion, and with at least one central computing unit (14), **characterized by** a data network and in that each of the individual pneumatic units (10.1, 1C.2, 10.3) has a dedicated local computing unit (12.1, 12.2 12.3) to which, in each case, a valve unit (36.1, 36.2, 36.3) and a sensor unit (28.1, 28.2, 28.3) are connected, the central and local computing units (12.1, 12.2, 12.3, 14) being provided for data exchange via the data network.

2. Pneumatic seat device according to Claim 1, **characterized in that** the computing units (12.1, 12.2, 12.3, 14) are arranged in a distributed manner.

3. Pneumatic seat device according to one of the preceding claims, **characterized by** at least one data unit (18.1, 18.2, 18.3, 20, 42) which is provided for wireless reception and/or for wireless transmission of data.

4. Pneumatic seat device according to one of the preceding claims, **characterized in that** the data network is equipped with a data bus (16) which allows an exchange of data of the local computing units (12.1, 12,2, 12.3) with the central computing unit (14), and exchange of data of the local computing units (12.1, 12.2, 12.3) with one another.

5. Pneumatic seat device according to one of the preceding claims, **characterized by** at least two data storage units (22.1, 22.2, 22.3, 24).

6. Pneumatic seat device according to one of the preceding claims, **characterized in that** each of the local computing units (12.1, 12.2, 12.3) comprises a local data storage unit (22.1, 22.2, 22.3)

7. Pneumatic seat device according to one of the preceding claims, **characterized by** at least one sensor unit (26.1, 26.2, 26.3, 28.1, 28.2, 28.3) for pressure sensing.

8. Pneumatic seat device according to one of the preceding claims, **characterized by** a pump (30) and a transfer unit (32) formed by a compressed-air line, which allows a transfer of air between the pump (30) and the pneumatic units (10.1, 10.2, 10.3), and between the individual pneumatic units (10.1, 10.2, 10.3).

## Revendications

1. Dispositif pneumatique pour un siège, en particulier dispositif pneumatique pour un siège d'avion, présentant plusieurs unités pneumatiques (10.1, 10.2, 10.3) qui présentent chacune au moins un coussin pneumatique, et au moins une unité centrale de calcul (14),
**caractérisé par**
un réseau de données et
en ce que les différentes unités pneumatiques (10.1, 10.2, 10.3) présentent chacune leur propre unité décentralisée de calcul (12.1, 12.2, 12.3) à chacune desquelles une unité de soupape (36.1, 36.2, 36.3) et une unité de détection (28.1, 28.2, 28.3) sont raccordées, l'unité centrale de calcul et les unités décentralisées de calcul (12.1, 12.2, 12.3, 14) étant prévues pour échanger des données par l'intermédiaire du réseau de données.

2. Dispositif pneumatique pour un siège selon la revendication 1, **caractérisé en ce que** les unités de calcul (12.1, 12.2, 12.3, 14) sont disposées réparties.

3. Dispositif pneumatique pour un siège selon l'une des revendications précédentes, **caractérisé par** au moins une unité de données (18.1, 18.2, 18.3, 20, 42) prévue pour la réception sans fil et/ou la transmission sans fil de données.

4. Dispositif pneumatique pour un siège selon l'une des revendications précédentes, **caractérisé en ce que** le réseau de données est équipé d'un bus de données (16) qui permet l'échange de données entre les unités décentralisées de calcul (12.1, 12.2, 12.3) et l'unité centrale de calcul (14) ainsi que l'échange de données entre les différentes unités décentralisées de calcul (12.1, 12.2, 12.3).

5. Dispositif pneumatique pour un siège selon l'une des revendications précédentes, **caractérisé par** au moins deux unités de mémoire (22.1, 22.2, 22.3, 24).

6. Dispositif pneumatique pour un siège selon l'une des revendications précédentes, **caractérisé en ce que** les unités décentralisées de calcul (12.1, 12.2, 12.3) comprennent chacune une unité décentralisée de mémoire (22.1, 22.2, 22.3).

7. Dispositif pneumatique pour un siège selon l'une des revendications précédentes, **caractérisé par** au moins une unité de détection (26-1, 26.2, 26.3, 28.1, 28.2, 28.3) destinée à détecter la pression.

8. Dispositif pneumatique pour un siège selon l'une des revendications précédentes, **caractérisé par** une pompe (30; et une unité de transfert (32) configurée comme conduit d'air comprimé qui permet un transfert d'air entre la pompe (30) et les unités pneumatiques (10.1, 10.2, 10.3) et entre les différentes unités pneumatiques (10.2, 10.2, 10.3).
